# EUROPÄISCHE PATENTSCHRIFT

(11) **EP 0 644 851 B1**
(45) Veröffentlichungstag und Bekanntmachung des Hinweises auf die Patenterteilung: **05.06.1996**
(21) Anmeldenummer: 93912839.3
(22) Anmeldetag: 01.06.1993
(51) Int. Cl.: B66C 13/06

(54) **HUBEINRICHTUNG FÜR LASTEN**
HOISTING DEVICE FOR LOADS
DISPOSITIF PERMETTANT DE LEVER DES CHARGES

(30) Priorität: 13.06.1992 DE 4219370
(43) Veröffentlichungstag der Anmeldung: 29.03.1995
(73) Patentinhaber: Krupp Fördertechnik GmbH, D-47226 Duisburg (DE)
(72) Erfinder: LÜCKING, Manfred, D-4300 Essen 14 (DE); MENDE, Burkhard, D-4300 Essen 1 (DE)
(86) Internationale Anmeldenummer: EP9301367
(87) Internationale Veröffentlichungsnummer: WO9325464

(56) Entgegenhaltungen:
- DE-A- 3 830 429
- DE-B- 1 246 201
- US-A- 3 744 652
- US-A- 3 792 779
- US-A- 3 945 673
- US-A- 4 273 242

## Beschreibung

Die Erfindung betrifft eine Hubeinrichtung mit einem waagerecht bewegbaren Konstruktionsteil und einem gegenüber diesem heb- und senkbaren Lastaufnahmemittel, das über auf Zug beanspruchbare Elemente an dem Konstruktionsteil aufgehängt ist und mit einer Last starr verbindbar ist. Das bewegbare Konstruktionsteil kann insbesondere eine auf einem Brücken- oder Laufkran verfahrbare Kranfahrkatze sein, es kann aber auch ein Teil eines Auslegers oder Portals eines Kranfahrzeugs sein. Das bewegbare Konstruktionsteil kann also relativ zu einem anderen bewegbaren Teil einer Hubeinrichtung (z.B. als Kranfahrkatze gegenüber dem wiederum fahrbaren Träger eines Laufkrans) oder als festes Teil einer insgesamt waagerecht bewegbaren Hubeinrichtung (z.B. eines Portalkrans) bewegt werden. Das Lastaufnahmemittel kann insbesondere als Greifrahmen (Spreader) für Container, Sattelauflieger usw. ausgebildet sein. Wesentlich ist, daß das Lastaufnahmemittel beim Umschlagen der Last fest mit dieser verbunden ist, so daß währenddessen keine Relativbewegungen zwischen der Last und dem Lastaufnahmemittel stattfinden können.

Beim Umschlagen von Containern, Wechselaufbauten, Lkw-Einheiten usw. werden diese sowohl senkrecht gehoben bzw. abgesenkt als auch waagerecht bewegt. Zur Erzielung hoher Umschlagleistungen werden kurze Bewegungszeiten angestrebt, die große Beschleunigungen und entsprechend große Querkräfte zur Folge haben.

Bei an Seilen aufgehängten Lastaufnahmemitteln kommt es bei Fahrbewegungen von Kranfahrkatze und/oder -brücke zu Pendelbewegungen des Lastaufnahmemittels, wodurch ein schnelles Erfassen der Last erschwert wird. Bei bereits angehängter Last kommt es zu Pendelschwingungen, wodurch ein genaues Absetzen der Last z.B. auf dem Rahmen eines Fahrzeugs sehr erschwert wird. Das Problem der Pendelbewegungen ergibt sich auch bei dem Einfluß von Wind.

Es sind zwar Pendeldämpfungen bekannt, bei denen die Enden der Seile an Hydraulikzylindern befestigt sind. Zur Betätigung der Hydraulikzylinder ist aber ein erheblicher Steuerungsaufwand erforderlich, der das Problem der Pendelbewegungen nur mindern, keinesfalls aber ausschließen kann.

Bei an Seilen aufgehängten Lastaufnahmemitteln, die für den Umschlag fest mit der Last verbunden werden sollen, besteht insbesondere bei einer Schieflage der Last das Problem, daß das Lastaufnahmemittel in die entsprechend schiefe Position gebracht werden muß. Ein solches Positionieren erfolgt bei bekannten Einrichtungen mit Zugseilen durch die genannten Hydraulikzylinder. Trotz des hierfür erforderlichen Steuerungsaufwandes kann es bei schiefer Lage der Last wegen der einwirkenden Schwerkraft zu erheblichen Zeitverzögerungen kommen.

Ein besonderes Problem ergibt sich, wenn die Last - in der Draufsicht gesehen - gegenüber dem Lastaufnahmemittel verdreht ist. Ein Schwenken eines an Seilen aufgehängten Lastaufnahmemittels ist nur in geringem Maße und mit außerordentlichem Aufwand möglich.

Der Erfindung liegt die Aufgabe zugrunde, eine Hubeinrichtung der eingangs genannten Art dahingehend zu verbessern, daß Pendelbewegungen des Lastaufnahmemittels und ggf. der von dieser erfaßten Last gegenüber dem bewegbaren Konstruktionsteil in einfacher Weise vermieden werden können und dadurch die Umschlagleistung erhöht werden kann. Außerdem soll das Lastaufnahmemittel zur Erfassung einer Last besser gegenüber dieser positionierbar sein.

Diese Aufgabe wird erfindungsgemäß dadurch gelöst, daß die auf Zug beanspruchbaren Elemente aus mindestens sechs in ihrer Länge individuell veränderbaren hydraulischen Stellzylindern gebildet sind, die jeweils über eine raumbewegliche Anlenkung an dem bewegbaren Konstruktionsteil und an dem Lastaufnahmemittel gelagert sind, wobei mindestens vier Stellzylinder schräg angeordnet sind.

Die Stellzylinder können in ihrer jeweiligen Länge festgestellt werden. Es ergibt sich somit insbesondere durch die schräg angeordneten Stellzylinder eine starre Verbindung zwischen dem bewegbaren Konstruktionsteil und dem Lastaufnahmemittel. Es kann somit nicht zu den unerwünschten Pendelbewegungen des Lastaufnahmemittels und der Last kommen.

Außer dem Heben und Senken der Last kann das Lastaufnahmemittel und ggf. die daran befestigte Last durch die Stellzylinder aber auch - bezogen auf die waagerechte Normallage - geneigt und - in der Draufsicht gesehen - um eine senkrechte Hochachse verdreht werden.

Die Stellzylinder sind als doppelt wirkende Hydraulikzylinder natürlich auch auf Druck belastbar. Da sie aber überwiegend auf Zug beansprucht werden, bestehen für die ausgefahrenen Stellzylinder keine Knickprobleme.

Eine besonders vorteilhafte Ausbildung der Erfindung besteht darin, daß sechs Stellzylinder vorgesehen sind, daß die Anlenkungen der Stellzylinder sowohl an dem beweglichen Konstruktionsteil als auch an dem Lastaufnahmemittel auf einem gedachten Kreis angeordnet sind, daß der Winkel zwischen der n-ten Anlenkung und der (n + 2)-ten Anlenkung (also z.B. der ersten und dritten Anlenkung, der zweiten und vierten Anlenkung, usw.) 120° beträgt, daß der Winkel zwischen zwei unmittelbar aufeinanderfolgenden Anlenkungen abwechselnd 60° bis 120°, vorzugsweise 90° bis 120°, und 0 bis 60°, vorzugsweise 0 bis 30°, beträgt und daß die Mitten jeweils zweier unmittelbar aufeinanderfolgender Anlenkungen auf dem bewegbaren Konstruktionsteil und die Mitten jeweils zweier unmittelbar aufeinanderfolgender Anlenkungen an dem Lastaufnahmemittel - in der Draufsicht gesehen - bei gleicher wirksamer Länge der Stellzylinder um 60° zueinander versetzt sind.

Durch das paarweise Anordnen der Stellzylinder mit abwechselnder Schräglage brauchen die Stellzylinder zum Anheben bzw. Absenken des Lastaufnahmemittels und ggf. der von diesem erfaßten Last lediglich gleich beaufschlagt zu werden, wodurch die Kolbenstangen synchron ein- bzw. ausgefahren werden.

Eine geneigte Lage des Lastaufnahmemittels wird in einem ganz bestimmten Fall dadurch erreicht, daß zwei benachbarte Stellzylinder, deren Anlenkungen an dem bewegbaren Konstruktionsteil weit auseinander und an dem Lastaufnahmemittel eng beieinander angeordnet sind, synchron in ihrer wirksamen Länge verändert werden, während die anderen vier Stellzylinder in ihrer wirksamen Länge im wesentlichen nicht verändert werden.

Zum Schwenken des Lastaufnahmemittels um eine senkrechte Hochachse wird jeder zweite Stellzylinder in seiner Länge um das gleiche Maß verändert und die jeweils dazwischenliegenden Stellzylinder um etwa das gleiche Maß entgegengesetzt verändert.

Der gedachte Kreis, auf dem die Stellzylinder an dem Lastaufnahmemittel angelenkt sind, kann dabei in seinem Durchmesser kleiner sein als der gedachte Kreis, auf dem die Stellzylinder an dem beweglichen Konstruktionsteil angelenkt sind.

Da die Stellzylinder jeweils an der Peripherie angeordnet sind, können die Energie- und Datenübermittlungsleitungen durch die unverbaute Mitte geleitet werden.

Grundsätzlich ist die Hubeinrichtung mit nur sechs Stellzylindern am wirtschaftlichsten. Es ist aber denkbar, auch 6 + 2 n Stellzylinder (n = 1, 2, ...) jeweils auf einem gedachten Kreis an dem beweglichen Konstruktionsteil und dem Lastaufnahmemittel anzulenken. Der Winkel zwischen zwei unmittelbar aufeinanderfolgenden Anlenkungen wäre dann 360°/(6 + 2 n) bis 360°/(3 + n) bzw. 0 bis 360°/(6 + 2 n).

Bei einer anderen bevorzugten Ausbildung der Erfindung sind acht Stellzylinder vorgesehen, von denen vier - bei rein senkrechter Lasteinwirkung - senkrecht angeordnet sind und sich - in der Draufsicht gesehen - an den Ecken eines gedachten Rechtecks befinden. In den vier gedachten Ebenen zwischen jeweils zwei Stellzylindern ist ein schräggestellter Stellzylinder angeordnet, wobei die Neigung der schrägen Stellzylinder in jeweils zwei der gedachten parallelen Ebenen entgegengesetzt ist.

Bei dieser Ausführungsform wird die eigentliche Hubarbeit von den senkrechten Stützzylindern und das Verschwenken des Lastaufnahmemittels um eine senkrechte Hochachse durch die schräg angeordneten Stellzylinder bewirkt.

Dabei ist es vorteilhaft, wenn das durch die senkrechten Stellzylinder gebildete gedachte Rechteck ein Quadrat ist, da die schrägen Stellzylinder zum Schwenken dan gleichmäßig beaufschlagt werden können. Das Kippen bzw. Neigen des Lastaufnahmemittels in bezug auf seine waagerechte Grundausrichtung wird im wesentlichen durch die senkrechten Stützzylinder herbeigeführt.

Ausführungsbeispiele der Erfindung sind in der Zeichnung zum Teil stark schematisiert dargestellt und werden im folgenden näher erläutert. Die Verstellzylinder sind vorzugsweise mit ihrem Gehäuse an der beweglichen Konstruktion angelenkt und wiederum vorzugsweise mit dem geschlossenen Ende der Gehäuse. Dies hat den Vorteil einer relativ einfachen konstruktiven Ausführung und daß die Stellzylinder genügend Bewegungsmöglichkeit haben.

Wenn es darauf ankommt, daß der Abstand zwischen dem beweglichen Konstruktionsteil und dem Lastaufnahmemittel möglichst gering ist, können die Zylindergehäuse der Stellzylinder auch an einer von dem geschlossenen Ende entfernten Stelle an dem beweglichen Konstruktionsteil angelenkt werden.

Ausführungsbeispiele der Erfindung sind in der Zeichnung z.T. stark schematisiert dargestellt und werden im folgenden näher erläutert. Es zeigen
- Fig. 1: eine an einer Laufkatze angehängte erfindungsgemäße Hubeinrichtung zum Handhaben eines Greifrahmens (Spreader) für Container in einer Seitenansicht,
- Fig. 2: die Stellzylinder dieser Hubeinrichtung in der Draufsicht,
- Fig. 3: eine andere Ausführungsform der Hubeinrichtung in einer Seitenansicht,
- Fig. 4: die Lagerung eines Stellzylinders der Ausführungsform nach Fig. 3 und
- Fig. 5: eine weitere Ausführungsform der Hubeinrichtung in einer perspektivischen Darstellung.

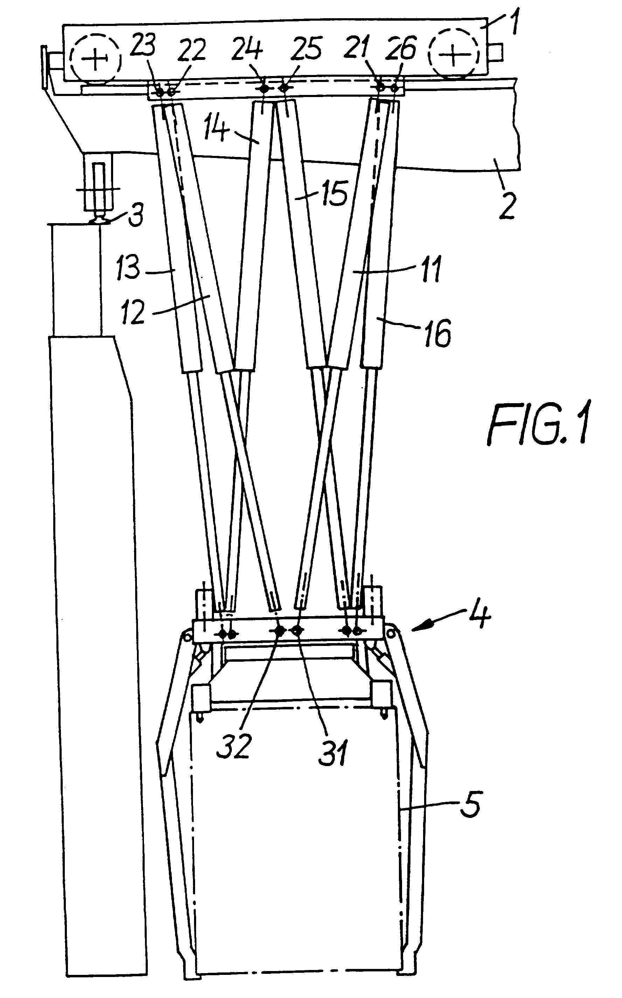

Ein als Laufkran ausgebildeter Umschlagkran weist eine Kranfahr- oder Laufkatze 1 auf, die auf einem Brückenträger 2 verfahrbar ist (Fig. 1 von rechts nach links und umgekehrt). Der Brückenträger 2 ist wiederum auf ortsfesten Schienen 3 senkrecht zu seiner eigenen Längserstreckung (in Fig. 1 senkrecht zur Zeichenebene) verfahrbar. Die Laufkatze 1 stellt also ein Konstruktionsteil dar, das in einer waagerechten Ebene beliebig bewegbar ist.

Unter der Laufkatze 1 ist ein Greifrahmen (Spreader) 4 zum Erfassen von Containern 5 angeordnet. Ein Container ist in Fig. 1 mit strichpunktierten Linien angedeutet.

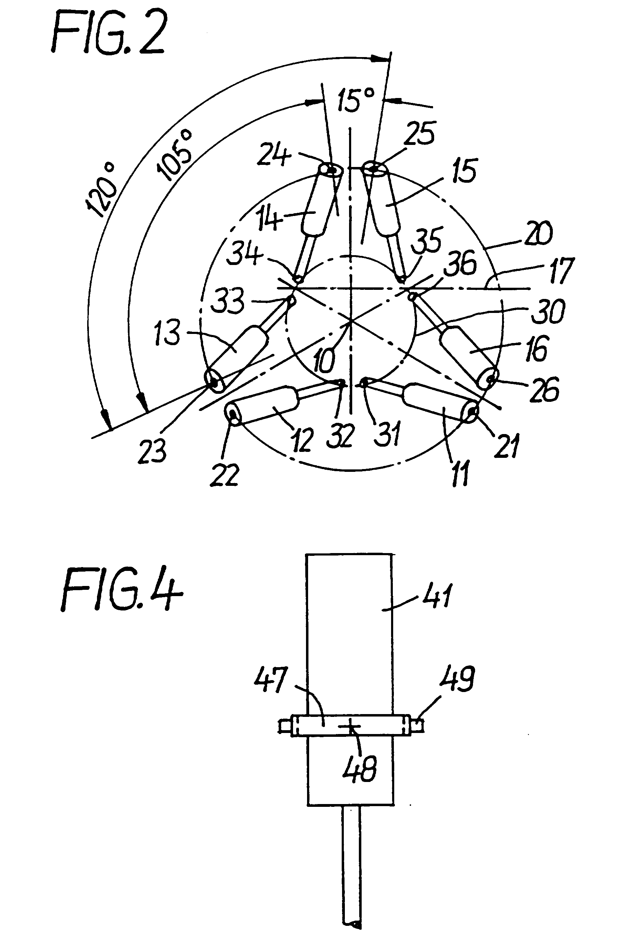

Der Greifrahmen 4 ist über sechs hydraulische Stellzylinder 11 bis 16 an der Laufkatze 1 angehängt. Die Stellzylinder 11 bis 16 sind mit dem geschlossenen Ende ihrer Gehäuse an der Unterseite der Laufkatze 1 raumbeweglich angelenkt. Die Anlenkpunkte 21 bis 26 liegen, wie aus Fig. 2 ersichtlich, auf einem gedachten Kreis 20 mit dem Mittelpunkt 10.

Die Anlenkpunkte 21 bis 26 sind ungleich über den Umfang verteilt und paarweise zusammen angeordnet, so daß zwischen den aufeinanderfolgenden Anlenkpunkten abwechselnd ein großer und ein kleiner Abstand vorhanden ist. Der Winkel zwischen den Anlenkpunkten 21/23, 23/25 und 25/21 beträgt - bezogen auf den Mittelpunkt 10 - einheitlich 2/3 π ≙ 120°. Der Winkel zwischen den eng beeinanderliegenden Anlenkpunkten 22/23, 24/25 und 26/21 beträgt π/12 ≙ 15°, der Winkel zwischen den weit auseinanderliegenden Anlenkpunkten, z.B. 23/24 entsprechend 7/12 π ≙ 105°. Die Kolbenstangen der Stellzylinder 11 bis 16 sind ebenfalls raumbeweglich in Anlenkpunkten 31 bis 36 am Greifrahmen 4 gelenkig gelagert. Die Anlenkpunkte 31 bis 36 liegen ebenfalls auf einem Kreis 30 um eine Senkrechte durch den Mittelpunkt 10 und sind dort paarweise zusammengfaßt. Die Mitten zwischen den paarweise zusammengefaßten Anlenkpunkten, z.B. 24/25 auf dem Kreis 20, und die Mitten der paarweise zusammengfaßten Anlenkpunkte, z.B. 35/36 auf dem Kreis 30, sind - bezogen auf die Senkrechte durch den Mittelpunmkt 10 - um π/3 ≙ 60° zueinander versetzt angeordnet.

Zum Heben und Senken des Greifrahmens 4 werden alle sechs Stellzylinder gleichmäßig beaufschlagt, so daß die Kolbenstangen synchron eingezogen bzw. ausgefahren werden.

Ist jedoch ein Container 5, bezogen auf eine senkrechte Hochachse durch den Mittelpunkt 10, gegenüber dem Greifrahmen 4 verdreht, so muß dieser zum Erfassen des Containers zuvor in die Lage des Containers geschwenkt werden. Zum Verschwenken des Greifrahmens 4 im Uhrzeigersinn werden die Kolbenstangen der Stellzylinder 12, 14, 16 eingefahren und die Kolbenstangen der Stellzylinder 11, 13, 15 im wesentlichen um den gleichen Betrag ausgefahren. Zum Verschwenken des Greifrahmens 4 entgegen dem Uhrzeigersinn erfolgt die Beaufschlagung der Stellzylinder entsprechend umgekehrt.

Das Neigen des Greifrahmens 4 gegenüber einer waagerechten Ebene wird an einem besonders einfachen Beispiel erläutert: Wenn die Stellzylinder 13 bis 16 im wesentlichen in ihrer Stellung festgehalten werden und die beiden Stellzylinder 11 und 12 gleichmäßig ausgefahren werden, so wird der in Fig. 2 unten befindliche Teil des Greifrahmens 4 abgesenkt und um eine Achse geschwenkt, die durch die Mitten der Anlenkpunkte 33/34 und 35/36 gegeben ist.

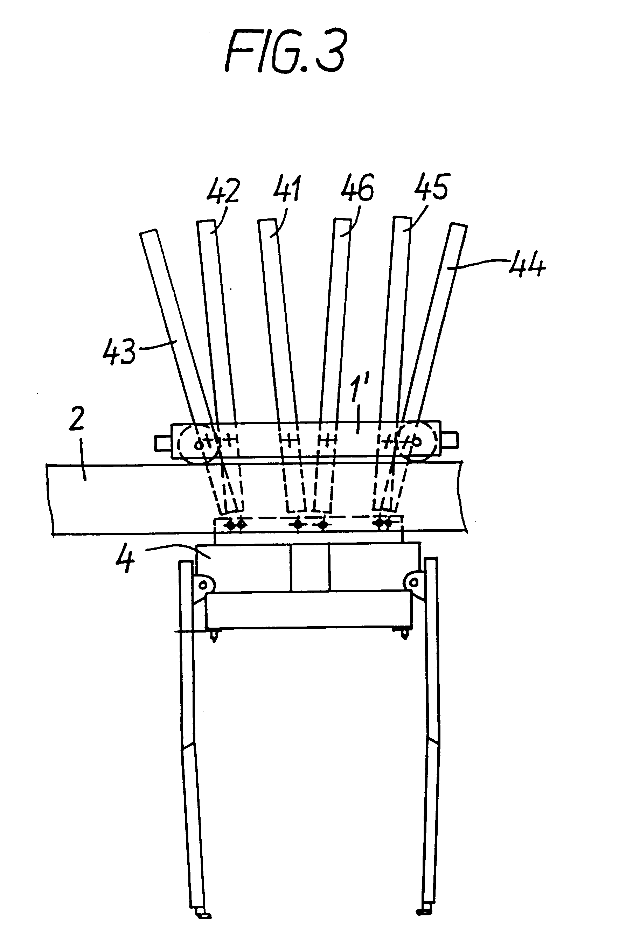

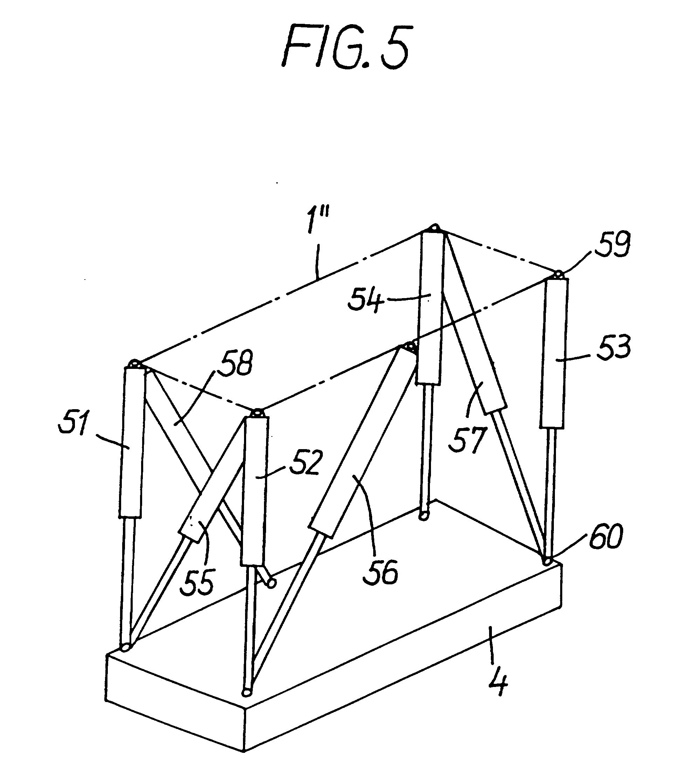

Während die Stellzylinder bei dem Ausführungsbeispiel gemäß den Fig. 1 und 2 mit dem geschlossenen Ende ihrer Gehäuse an der Laufkatze 1 angehängt sind, zeigt Fig. 3 ein Ausführungsbeispiel, bei dem die Stellzylinder 41 bis 46 bei eingezogenen Kolbenstangen und entsprechend angehobenem Greifrahmen 4 an einer Stelle des Zylindergehäuses angelenkt sind, die etwa 2/3 der Gehäuselänge vom geschlossenen Ende entfernt sind. In Fig. 4 ist für den Stellzylinder 41 dargestellt, daß um das Zylindergehäuse ein kardanischer Ring 47 angeordnet ist, der um eine Achse 48 gegenüber dem Zylindergehäuse schwenkbar ist. Senkrecht zur Achse 48 weist der kardanische Ring 47 zwei Zapfen 49 auf, die in eine entsprechende Lagerstelle der Laufkatze 1' eingreifen.

Bei dem Ausführungsbeispiel gemäß Fig. 5 ist der Greifrahmen 4 über vier senkrecht angeordnete Stellzylinder 51 bis 54 an der nur mit strichpunktierten Linien angedeuteten Laufkatze 1" angehängt. Die Stellzylinder 51 bis 54 liegen - in der Draufsicht gesehen - in den Ecken eines Rechtecks. Jeweils zwei dieser Stellzylinder bilden eine gedachte Ebene, innerhalb derer ein schräg angeordneter Stellzylinder 55, 56, 57 bzw. 58 angeordnet ist. Alle schrägen Zylinder 55 bis 58 weisen den gleichen Neigungswinkel auf, wobei die Neigung der Zylinder innerhalb zweier paralleler Ebenen, z.B. 56, 58, entgegengesetzt ist. Alle Zylinder 51 bis 58 sind über raumbewegliche Anlenkpunkt 59 bzw. 60 mit der Laufkatze 1" und dem Greifrahmen 4 verbunden.

Zum Heben und Senken des Greifrahmens 4 werden die senkrechten Zylinder 51 bis 54 gleich beaufschlagt, so daß deren Kolbenstangen synchron eingezogen oder ausgefahren werden. Den schrägen Zylindern 55 bis 58 wird eine ihrer Schräglage entsprechende Bewegung vorgegeben. Zum Neigen des Greifrahmens 4, z.B. um die unteren Anlenkpunkte 60 der Stellzylinder 51 und 54, werden die Stellzylinder 52 und 53 betätigt, wobei den schrägen Zylindern 56 und 57 eine ihrer Schräglage entsprechende Bewegung vorgegeben wird. Zum Verschwenken, d.h. zum Verdrehen des Greifrahmens 4 um seine senkrechte Hochachse im Uhrzeigersinn werden die schrägen Zylinder 55 bis 58 ausgefahren. Zur Beibehaltung der Höhe des Greifrahmens 4 können die senkrechten Stellzylinder 51 bis 54 eine entsprechende Längenkorrektur erfahren.

## Patentansprüche

1. Hubeinrichtung mit einem waagerecht bewegbaren Konstruktionsteil (1,1',1") und einem gegenüber diesem heb- und senkbaren Lastaufnahmemittel (4), das über auf Zug beanspruchbare Elemente an dem Konstruktionsteil aufgehängt ist und mit einer Last starr verbindbar ist,
**dadurch gekennzeichnet**,
daß die auf Zug beanspruchbaren Elemente aus mindestens sechs in ihrer Länge individuell veränderbaren hydraulischen Stellzylinder (11 bis 16; 41, ...; 51, ...) gebildet sind, die jeweils über eine raumbewegliche Anlenkung (21 bis 26 und 31 bis 36; 59, 60) an dem Konstruktionsteil (1; 1'; 1") und an dem Lastaufnahmemittel (4) gelagert sind, wobei mindestens vier Stellzylinder (11 bis 16; 41 bis 44; 55 bis 58) schräg angeordnet sind.

2. Hubeinrichtung nach Anspruch 1, dadurch gekennzeichnet,
daß sechs Stellzylinder (11 bis 16) vorgesehen sind,
daß die Anlenkungen (21 bis 26 bzw. 31 bis 36) der Stellzylinder sowohl an dem bewegbaren Konstruktionsteil (1) als auch an dem Lastaufnahmemittel (4) auf einem gedachten Kreis (20 bzw. 30) angeordnet sind,
daß der Winkel zwischen der n-ten und der (n + 2)-ten Anlenkung (21/23, ... bzw. 31/33, ...) = 120° beträgt, daß der Winkel zwischen zwei unmittelbar aufeinanderfolgender Anlenkungen (21/22, 22/23, ... und 32/33, 33/34, ...) abwechselnd 60 bis 120°, vorzugsweise 90 bis 120°, und 0 bis 60°, vorzugsweise 0 bis 30°, beträgt
und daß die Mitten jeweils zweier unmittelbar aufeinanderfolgender Anlenkungen, (22/23, ...) an dem bewegbaren Konstruktionsteil (1) und die Mitten zwischen jeweils zwei benachbarten Anlenkungen (31/32, ...) am Lastaufnahmemittel (4) - in der Draufsicht gesehen - bei gleicher wirksamer Länge der Stellzylinder (11 bis 16) um 60° zueinander versetzt sind.

3. Hubeinrichtung nach Anspruch 1 oder 2, dadurch gekennzeichnet, daß der gedachte Kreis (30), auf dem die Stellzylinder (11 bis 16; 41 bis 46) an dem Lastaufnahmemittel (4) angelenkt sind, im Durchmesser kleiner ist als der gedachte Kreis (20), auf dem die Stellzylinder an dem beweglichen Konstruktionsteil (1; 1') angelenkt sind.

4. Hubeinrichtung nach Anspruch 1, dadurch gekennzeichnet, daß acht Stellzylinder (51 bis 54, 55 bis 58) vorgesehen sind, von denen vier (51 bis 54) - bei rein senkrechter Lasteinwirkung - senkrecht angeordnet sind und sich - in der Draufsicht gesehen - an den Ecken eines gedachten Rechtecks befinden, und daß in den zwischen jeweils zwei Stellzylindern (51/52, 52/53, ...) gedachten vier Ebenen ein schräggestellter Zylinder (55, 56, ...) angeordnet ist, wobei die Neigung der schrägen Stellzylinder in jeweils zwei der gedachten parallelen Ebenen entgegengesetzt gerichtet ist.

5. Hubeinrichtung nach Anspruch 4, dadurch gekennzeichnet, daß das durch die senkrechten Stellzylinder (51, 52, ...) gebildete Rechteck ein Quadrat ist.

6. Hubeinrichtung nach einem der Ansprüche 1 bis 5, dadurch gekennzeichnet, daß die Stellzylinder (11, ...; 41, ...; 51, ...) mit ihrem Gehäuse an dem beweglichen Konstruktionsteil (1; 1'; 1") angelenkt sind.

7. Hubeinrichtung nach Anspruch 6, dadurch gekennzeichnet, daß die Anlenkung (21 bis 26; 59) der Gehäuse an ihrem geschlossenen Ende vorgesehen ist.

8. Hubeinrichtung nach Anspruch 6, dadurch gekennzeichnet, daß die Anlenkung (21 bis 26; 59) der Gehäuse an einer von dem geschlossenen Ende entfernten Stelle (48) vorgesehen ist.

9. Hubeinrichtung nach Anspruch 8, dadurch gekennzeichnet, daß die Anlenkung 2/3 der Gehäuselänge von dem geschlossenen Ende und 1/3 der Gehäuselänge von dem offenen, von der Kolbenstange durchdrungenen Gehäuseende vorgesehen ist.

## Claims

1. A hoisting device with a horizontally movable construction part (1, 1', 1") and a load-bearing means (4) which may be raised and lowered relative thereto and which is suspended from the construction part via elements capable of bearing tensile force and may be rigidly connected to a load, characterised in that the elements capable of bearing tensile force are formed from at least six hydraulic adjusting cylinders (11 to 16; 41, ...; 51, ...), which may be individually varied in length and are mounted via a respective spatially movable pivot (21 to 26 and 31 to 36; 59, 60) on the construction part (1; 1'; 1") and on the load-bearing means (4), wherein at least four adjusting cylinders (11 to 16; 41 to 44; 55 to 58) are arranged on an incline.

2. Hoisting device according to Claim 1, characterised in that six adjusting cylinders (11 to 16) are provided; that the pivots (21 to 26 or 31 to 36) of the adjusting cylinders are arranged on a theoretical circle (20 or 30) both on the movable construction part (1) and on the load-bearing means (4); that the angle between the n-th pivot and the (n+2)-th pivot (21/23, ... or 31/33,...) amounts to 120°; that the angle between two directly consecutive pivots (21/22, 22/23, ... and 32/33, 33/34, ...) alternately amounts to 60° to 120°, preferably 90° to 120°, and 0° to 60°, preferably 0° to 30°; and that the centres of each two directly consecutive pivots (22/23, ...) on the movable construction part (1) and the centres of each of two adjacent pivots (31/32, ...) on the load-bearing means (4) - as viewed from the top - are offset by 60° relative to one another with equal effective length of the adjusting cylinders (11 to 16).

3. Hoisting device according to Claim 1 or 2, characterised in that the theoretical circle (30) on which the adjusting cylinders (11 to 16; 41 to 46) are pivoted to the load-bearing means (4) has a smaller diameter than the theoretical circle (20) on which the adjusting cylinders are pivoted to the movable construction part (1; 1').

4. Hoisting device according to Claim 1, characterised in that eight adjusting cylinders (51 to 54, 55 to 58) are provided, of which four (51 to 54) - in the case of purely vertical load application - are arranged vertically and are located at the corners of a theoretical rectangle - as viewed from the top; that in the four theoretical planes between two respective adjusting cylinders (51/52, 52/53, ...), an inclined adjusting cylinder (55, 56,...) is located, the inclination of the inclined adjusting cylinders being opposed in two of the theoretical parallel planes.

5. Hoisting device according to Claim 4, characterised in that the rectangle formed by the vertical adjusting cylinders (51, 52, ...) is a square.

6. Hoisting device according to one of Claims 1 to 5, characterised in that the adjusting cylinders (11, ...; 41, ...; 51, ...) are pivoted with their housing to the movable construction part (1; 1'; 1").

7. Hoisting device according to Claim 6, characterised in that the pivot (21 to 26; 59) of the housings is provided at its closed end.

8. Hoisting device according to Claim 6, characterised in that the pivot (21 to 26; 59) of the housings is provided at a point (48) remote from its closed end.

9. Hoisting device according to Claim 8, characterised in that the pivot is provided 2/3 of the length of the housing from the closed end and 1/3 of the length of the housing from the open housing end with the piston rod passing through it.

## Revendications

1. Dispositif de levage comportant une pièce de construction (1, 1', 1") mobile horizontalement et un moyen de préhension de la charge (4), que l'on peut faire monter et descendre par rapport à cette pièce de construction, et qui est suspendu à la pièce de construction par des éléments sollicitables à la traction et peut être relié de façon rigide à une charge,
caractérisé en ce que
- les éléments sollicitables à la traction sont formés par au moins six vérins hydrauliques de réglage (11 à 16; 41, ...; 51, ...), dont la longueur est modifiable individuellement et qui sont chacun montés sur la pièce de construction (1, 1', 1") et sur le moyen de préhension de la charge (4) par l'intermédiaire d'une articulation mobile dans l'espace (21 à 26 et 31 à 36; 59, 60), étant entendu qu'au moins quatre vérins de réglage (11 à 16; 41 à 44; 55 à 58) sont disposés inclinés.

2. Dispositif de levage suivant la revendication 1, caractérisé
- en ce que six vérins de réglage (11 à 16) sont prévus,
- en ce que les articulations (21 à 26 et 31 à 36) des vérins de réglage sont respectivement disposées sur un cercle virtuel (20 et 30), aussi bien sur la pièce de construction (1) que sur le moyen de préhension de la charge (4),
- en ce que l'angle formé entre l'articulation n et l'articulation (n + 2), (respectivement 21/23, ... et 31/33, ...), est égal à 120°,
- en ce que l'angle formé entre deux articulations se suivant immédiatement (21/22, 22/23, ... et 32/33, 33/34, ...) est alternativement compris entre 60 et 120°, de préférence ente 90 et 120°, et entre 0 et 60°, de préférence entre 0 et 30°,
- et en ce que les milieux de chaque fois deux articulations se suivant immédiatement, (22/23, ...) sur la pièce de construction (1), et les milieux de chaque fois deux articulations se suivant immédiatement (31/32, ...) sur le moyen de préhension de la charge (4), sont - en vue de dessus - décalés de 60° les uns par rapport aux autres, pour la même longueur efficace des vérins de réglage (11 à 16).

3. Dispositif de levage suivant la revendication 1 ou la revendication 2, caractérisé en ce que le cercle virtuel (30) suivant lequel les vérins de réglage (11 à 16; 41 à 46) s'articulent sur le moyen de préhension de la charge (4), a un diamètre plus petit que le cercle virtuel (20) suivant lequel les vérins de réglage s'articulent sur la pièce de construction mobile (1, 1').

4. Dispositif de levage suivant la revendication 1, caractérisé en ce que huit vérins de réglage (51 à 54, 55 à 58) sont prévus, dont quatre (51 à 54) - dans le cas d'une charge purement verticale - sont disposés verticalement et se trouvent - en vue de dessus - aux coins d'un rectangle virtuel, et en ce que, dans chacun des quatre plans virtuels situés chacun entre deux vérins de réglage (51/52, 52/53, ...), est disposé un vérin (55, 56, ...) placé incliné, l'inclinaison des vérins de réglage inclinés étant dirigée chaque fois en sens opposé dans chaque fois deux des plans virtuels parallèles.

5. Dispositif de levage suivant la revendication 4, caractérisé en ce que le rectangle formé par les vérins de réglage verticaux (51, 52, ...) est un carré.

6. Dispositif de levage suivant l'une des revendications 1 à 5, caractérisé en ce que les vérins de réglage (11, ...; 41, ...; 51,...) s'articulent, avec leur carter, sur la pièce de construction mobile (1; 1'; 1").

7. Dispositif de levage suivant la revendication 6, caractérisé en ce que l'articulation (21 à 26; 59) des carters est prévue sur leur extrémité fermée.

8. Dispositif de levage suivant la revendication 6, caractérisé en ce que l'articulation (21 à 26; 59) des carters est prévue à un endroit (48) éloigné de leur extrémité fermée.

9. Dispositif de levage suivant la revendication 8, caractérisé en ce que l'articulation est prévue aux 2/3 de la longueur du carter depuis l'extrémité fermée et au tiers de la longueur du carter depuis son extrémité ouverte, traversée par la tige de piston.
